Europäisches Patentamt

European Patent Office

Office européen des brevets

(19)

(11) Publication number: **0 241 261 B1**

(12) **EUROPEAN PATENT SPECIFICATION**

(45) Date of publication of patent specification: **17.06.92**  (51) Int. Cl.5: **G11B  27/02**

(21) Application number: **87303004.3**

(22) Date of filing: **07.04.87**

(54) **Improvements in or relating to video editing and processing systems.**

(30) Priority: **10.04.86 GB 8608875**

(43) Date of publication of application:
**14.10.87 Bulletin  87/42**

(45) Publication of the grant of the patent:
**17.06.92 Bulletin  92/25**

(84) Designated Contracting States:
**DE FR GB**

(56) References cited:
**DE-A- 3 401 678**
**GB-A- 2 156 627**
**US-A- 4 067 049**

**ELECTRONICS & WIRELESS WORLD. vol. 93,
no. 1601, March 1986, SUTTON GB pages 29 -
32; WATKINSON: "Digital audio editing"**

**RUNDFUNKTECHNISCHE MITTEILUNGEN. vol.
22, no. 1, 1978, NORDERSTEDT DE pages 15 -
21; HEITMANN: "ZEITLUPPENWIEDERGABE
UND SUCHLAUF BEI "SEGMENTED
FIELD"-VIDEORECORDERN"**

(73) Proprietor: **OUANTEL LIMITED
Pear Tree Lane
Newbury Berkshire RG13 2LT(GB)**

(72) Inventor: **Cawley, Robin Alexander
Autumn Cottage, Penwood, Burghclere
Newbury, Berkshire, RG15 9EN(GB)**

(74) Representative: **Milhench, Howard Leslie et al
R.G.C. Jenkins & Co. 26 Caxton Street
London SW1H 0RJ(GB)**

EP 0 241 261 B1

## Description

This invention relates to improvements in systems for processing and editing sequences of frames of video signals.

When editing video signal sequences the position of the point of editing is often dependent on the timing of the accompanying audio. For example in the case of video accompanied by speech it might be desirable to remove part of the speech in which case the video signals associated with that part of the speech may also have to be removed and the position of the editing would then be dependent on, say, the end of a sentence. Most existing editing systems have the capability of displaying sequences of frames of video signals in both forward or reverse order for example where a video tape is played backwards. In Quantel's "Harry" editing system the video signals are recorded on parallel transfer discs and the operator controls the reading of the store so that the sequence of frames may be displayed in reverse or usual order at the speed required. A processor is also provided which allows the signals to be processed as required. Using conventional audio techniques in these editing systems the operator is limited as, when the frames are displayed in reverse order, the audio is also played in reverse. This is particularly disadvantageous when speech is accompanying the video as the words will be reversed and it is therefore more difficult to identify the position where an edit is required.

The object of the invention is to provide a video editing and processing system in which the output of the audio signals is more flexible.

According to the invention there is provided a method of video editing in which frames of video signals are displayed in reverse order and in which at the same time associated audio signals are output in the normal order so that the sound is heard in the usual manner.

Further according to the invention there is provided a video editing system comprising,
means for storing a sequence of frames of video signals, random access storage means for storing associated audio signals,
video address generator means for providing address as in the store means from which video signals are read to form a display, said address generator means being adapted in one mode to provide addresses so that the frames of video signals are displayed in reverse order,
and audio address generator means for generating addresses in the random access storage means from which audio signals are to be output, said audio address means being adapted in one mode to output audio signals in forward order when said video frames are output in reverse order.

Preferably said address generators are operator controlled.

One embodiment of the invention will now be described with reference to the accompanying diagram which illustrates this embodiment.

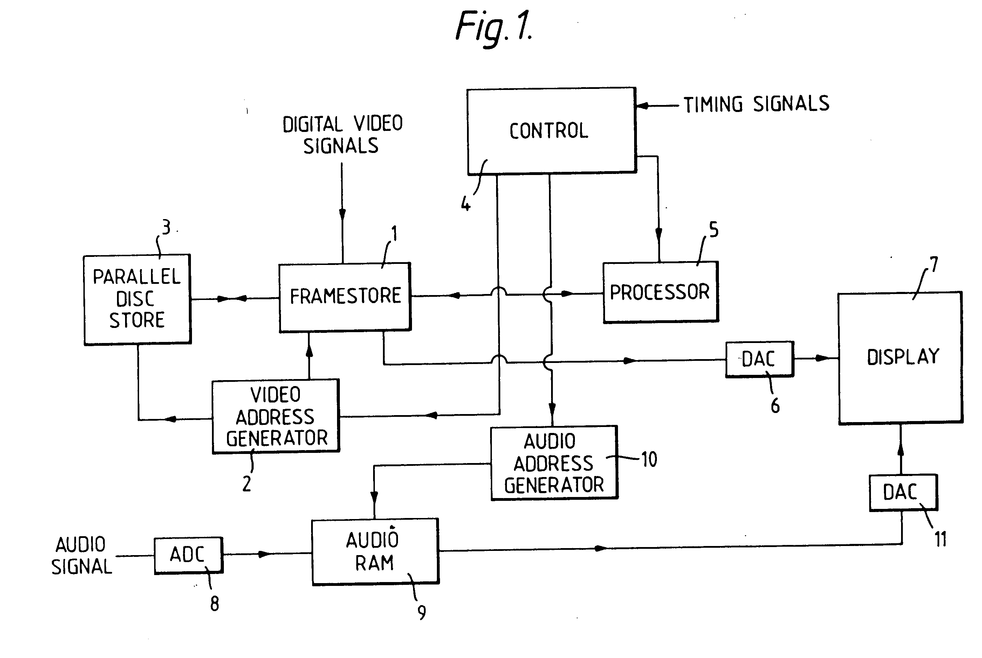

The system illustrated in Fig. 1 which forms this embodiment receives sequences of video signals and associated audio signals. Frames of digital video signals representing successive pictures in a sequence are input to framestore 1 frame by frame and transferred under the control of video address generator 2 to parallel transfer disc store 3 at normal video rate. As described in co-pending UK application number 2156627 incoming video signals are split into four eight bit components (i.e. 2 luminance components and 2 chrominance components) and are written in real time into four separate sections of framestore 1 under the control of video address generator 2. The disc stores used in this system can operate in a mode where five heads are operative on each disc, and are connected so that signals can be written in or read from respective tracks on the disc in parallel.

Parallel transfer disc store 3 in this embodiment comprises four of such discs and twenty channels are then provided to transfer data by connecting the five heads of each disc to one of the four sections of the framestore. In this way video signals may be transferred to and from the disc store in real time (i.e. at the normal video rate) although the disc stores may also operate in normal disc mode so that the transfer is much slower.

Once the sequence of video signals for editing is stored on the parallel transfer discs 3 the operator can use control 4 to select frames for editing or display. Video address generator 2 receives command signals from control 4 and in response to these signals generates addresses on the disc store from which signals are to be read. The address generator 2 may address the discs so that frames of video signals are output in sequence either in forward or reverse order at normal video rate or so that one frame may be output for the time required by the operator. Signals output from the parallel disc store can be processed in processor 5 the operation of which is controlled by control 4 to produce effects such as rotating a frame of signals or removing a frame from the sequence. The processor may also co-operate with the framestore to swap the position of frames in the sequence. Address generator 2 also controls the signals output via framestore 1 and DAC 6 to display 7. Signals to be displayed on display 7 must be output from the disc store at normal video rate but for certain types of processing it may be advantageous to read the signals from the disc at less than video rate.

Audio signals associated with the incoming video signals are converted from analogue to digital form in ADC 8 in known manner. The digital sample signals are then written in sequence into audio ram 9 under the control of audio address generator 10 which receives command signals from control 4. Timing signals are received by control 4 so that the audio signals are in synchronisation with video signals. When a frame of video signals is output to display 7 audio address generator generates the addresses of the signals associated with that frame and these signals are read from the audio ram 9 converted to analogue form in DAC 11 and applied to the audio circuits of display 7. Unlike prior art systems, however, the audio signals may be output in forward order even when the video signals are output in reverse order. When the operator selects the mode of operation where the sequence is reversed the video signals are output in a step wise manner (i.e. frame by frame) but with the order of the frames reversed. The audio signals, however, are output in a continuous sequence with the sample timing being such that one frame of audio signals coincides with the frame of associated video signals. To achieve this timing the control 4 includes a predictor, which when the system is operating in a selected mode, predicts the time to the display of a particular frame, and means for starting the sound replay on the sample at the predicted time ahead of the sound associated with the particular frame.

Considering the case when a sequence of video frames numbered 1-10 has been stored in the parallel transfer disc and associated audio signals in RAM 9 and the operator wishes to output the frames in reverse order. The operator uses control 4 which sends a command signal to video address generator and this provides read addresses frame by frame for store 3 in reverse order i.e. frame 10 first then frame 9 etc. If the operator, however, needs to hear the accompanying audio for, say frame 4, then command signals are applied to the audio address generator 10 which generates read addresses for audio signals. As the frames are displayed in reverse order frame 4 will not appear until the 6th frame period. The period for which each frame appears on the screen can be determined by the operator. The audio address generates addresses for audio signals for a number of frames of sound, that number generally being selected so that any speech will be intelligible and including the frame of signals relating to the frame of video signals in which the operator is interested. The sound is output by generating the start address of a sequence in response to a command signal at a certain time so that the frame of audio signals of interest are output at the same time as the video signals. This time will obviously be dependent on the period for which the video frames appear. The timing signals provided to control 4 ensure that the required timing is possible.

An alternative method for outputting the audio signals is to output a sequence of signals corresponding to the number which gives the minimum time necessary to produce intelligible speech say $\frac{1}{2}$ second. A frame of video signals will be displayed on the screen for the same period or longer and the sound sequences will include the signals relating to that frame. When the next frame is displayed a similar sequence of audio signals will be output and this sequence will include some signals which were output for the previous frame. This sequence will of course include the audio signals relevant to the new frame.

Having thus described the present invention by reference to a preferred embodiment it is to be well understood that the embodiment in question is exemplary only and that modifications and variations such as will occur to a person skilled in the art may be made without departure from the scope of the invention as set forth in the appended claims and equivalents thereof.

## Claims

1. A method of video editing in which frames of video signals are displayed in reverse order and in which at the same time associated audio signals are output in normal order so that the sound is heard in the usual manner.

2. A method according to claim 1 in which successive frames of video signals are displaced frame by frame in reverse order whilst associated audio signals are output in a continuous sequence with such timing that the audio signals for one frame of the video signals are heard at the time of display of the said one frame.

3. A method according to claim 1 in which audio signals are output in a continuous sequence for a time period sufficient to produce intelligible speech, and one of the frames of video displayed in said reverse order and associated with said audio signals is displayed for said time period.

4. A video editing and processing system comprising:
   means for storing a sequence of frames of video signals,
   random access storage means for storing associated audio signals,
   video address generator means for providing addresses in said first means for storing from which video signals are read to form a display,

said address generator means being adapted in one mode to provide addresses so that the frames of video signals are output and displayed in reverse order,

and audio address generator means for generating addresses in said random access storage means from which audio signals are output, said audio address means being adapted in said one mode to output audio signal in forward order when said video frames are output in reverse order.

5. A system according to claim 4, including timing means for causing said audio signals to be output in a continuous sequence, with such timing that the audio signals for one frame of video signals are heard at the time of display of said frame.

6. A system according to claim 4 including timing means for causing said audio signals to be output for a time period sufficient to produce intelligible speech, and for causing one of the frames of video signals displayed in reverse order and associated with said audio signals to be displayed for said time period.

**Revendications**

1. Procédé de montage vidéo dans lequel des images de signaux vidéo sont affichées en ordre inverse et dans lequel dans le même temps, des signaux audio associés sont émis en sortie dans l'ordre normal de telle sorte que le son soit entendu selon la manière habituelle.

2. Procédé selon la revendication 1, dans lequel des images successives de signaux vidéo sont déplacées image par image en ordre inverse tandis que des signaux audio associés sont émis en sortie selon une séquence continue avec un cadencement tel que les signaux audio d'une image de signaux vidéo soient entendus au moment de l'affichage de ladite une image.

3. Procédé selon la revendication 1, dans lequel des signaux audio sont émis en sortie selon une séquence continue pendant une période temporelle suffisante pour produire une conversation intelligible, et l'une des images vidéo affichées en ordre inverse et associées auxdits signaux audio est affichée pendant ladite période temporelle.

4. Système de montage et de traitement vidéo comprenant :

un moyen pour stocker une séquence d'images de signaux vidéo ;

un moyen de stockage à accès aléatoire pour stocker des signaux audio associés ;

un moyen de générateur d'adresse vidéo pour fournir des adresses dudit premier moyen de stockage à partir desquelles des signaux vidéo sont lus pour former un affichage ;

ledit moyen de générateur d'adresse étant adapté dans un mode afin de fournir des adresses de telle sorte que les images de signaux soient émises en sortie et affichées en ordre inverse; et

un moyen de générateur d'adresse audio pour générer des adresses dudit moyen de stockage à accès aléatoire à partir desquelles des signaux audio sont émis en sortie, ledit moyen d'adresse audio étant adapté dans ledit un mode pour émettre en sortie un signal audio dans l'ordre direct lorsque lesdites images vidéo sont émises en sortie en ordre inverse.

5. Système selon la revendication 4, incluant un moyen de cadencement pour amener lesdits signaux audio à être émis en sortie suivant une séquence continue, ce cadencement étant tel que les signaux audio pour une image de signaux vidéo sont entendus au moment de l'affichage de ladite image.

6. Système selon la revendication 4, incluant un moyen de cadencement pour amener lesdits signaux audio à être émis en sortie pendant une période temporelle suffisante pour produire une conversation intelligible et pour amener l'une des images de signaux vidéo affichées en ordre inverse et associées auxdits signaux audio à être affichée pendant ladite période temporelle.

**Patentansprüche**

1. Video-Aufzeichnungsänderungverfahren, bei dem Bilder von Videosignalen in umgekehrter Folge angezeigt werden und bei dem gleichzeitig zugeordnete Tonsignale in normaler Folge ausgegeben werden, so daß der Ton in gebräuchlicher Form hörbar ist.

2. Verfahren nach Anspruch 1, bei dem aufeinanderfolgende Bilder von Videosignalen bildweise in umgekehrter Folge angezeigt werden, während zugeordnete Tonsignale in kontinuierlicher Folge mit einem derartigen Zeittakt ausgegeben werden, daß sie für ein Bild der Videosignale im Zeitpunkt der Anzeige dieses einen Bildes hörbar sind.

3. Verfahren nach Anspruch 1, bei dem Tonsignale in kontinuierlicher Folge in einer Zeitperiode ausgegeben werden, die zur Erzeugung einer verständlichen Sprache ausreichend ist, und bei dem eines der Bilder der in umgekehrter Folge angezeigten und den Tonsignalen zugeordneten Videosignale in dieser Zeitperiode angezeigt wird.

4. Video-Aufzeichnungsänderungs- und -Bearbeitungssystem mit:
einem Speicher zur Speicherung einer Folge von Bildern von Videosignalen,
einem Speicher mit wahlfreiem Zugriff zur Speicherung von zugeordneten Tonsignalen,
einem Videoadreßgenerator zur Erzeugung von Adressen für den Videosignalbild-Speicher, aus dem Videosignale zur Bildung einer Anzeige ausgelesen werden,
einer Betriebsart des Adreßgenerators, in welcher er solche Adressen liefert, daß die Bilder der Videosignale ausgegeben und in umgekehrter Folge angezeigt werden, und
einem Tonadreßgenerator zur Erzeugung von Adressen für den Speicher mit wahlfreiem Zugriff, aus dem Tonsignale ausgegeben werden, wobei der Tonadreßgenerator in der einen Betriebsart zur Ausgabe von Tonsignalen in Vorwärtsfolge dient, wenn Videobilder in umgekehrter Folge ausgegeben werden.

5. System nach Anspruch 4 mit einer Zeittaktanordnung für eine Ausgabe von Tonsignalen in kontinuierlicher Folge mit einem solchen Zeittakt, daß die Tonsignale für ein Bild von Videosignalen zur Zeit der Anzeige dieses Bildes hörbarbar sind.

6. System nach Anspruch 4 mit eine Zeittaktanordnung zur Ausgabe von Tonsignalen für eine Zeitperiode, die zur Realisierung einer verständlichen Sprache ausreicht, sowie zur Anzeige eines der Bilder von in umgekehrter Folge angezeigten und den Tonsignalen zugeordneten Videosignalen für diese Zeitperiode.

# Fig.1.

EP 0 241 261 B1